# EUROPÄISCHE PATENTSCHRIFT

(11) **EP 0 644 358 B1**
(45) Veröffentlichungstag und Bekanntmachung des Hinweises auf die Patenterteilung: **19.06.1996**
(21) Anmeldenummer: 94104493.5
(22) Anmeldetag: 22.03.1994
(51) Int. Cl.: F16H 21/44, F16D 65/16

(54) **Bremsanlage mit einer Krafterzeugungseinrichtung zum Erzeugen eines reversiblen Arbeitshubs**
Braking device with a force generating device for establishing a reciprocating working stroke
Dispositif des freins avec un dispositif de génération de force pour engendrer une course de travail de va-et-vient

(30) Priorität: 08.09.1993 DE 4330440
(43) Veröffentlichungstag der Anmeldung: 22.03.1995
(73) Patentinhaber: KNORR-BREMSE AG, 80809 München (DE)
(72) Erfinder: Staltmeir, Josef, D-80807 München (DE); Fuderer, Erich, D-82110 Germering (DE)

(56) Entgegenhaltungen:
- WO-A-92/07202
- DE-A- 3 500 056
- DE-A- 4 041 455
- DE-U- 7 915 980

## Beschreibung

Die vorliegende Erfindung bezieht sich auf eine Bremsanlage von Schienen- und Nutzfahrzeugen mit einer Krafterzeugungseinrichtung zum Erzeugen eines reversiblen Arbeitshubs gemäß dem Oberbegriff des Anspruchs 1. Derartige Anlagen gehören zum internen Wissen der Anmelderin und sind bislang der Öffentlichkeit nicht zugänglich. Gegenstand der vorliegenden Erfindung sind ferner Zuspannvorrichtungen für Scheibenbremsen der in den Oberbegriffen der Ansprüche 24 und 26 angegebenen Art, die mittels der erfindungsgemäßen Einrichtung betätigt werden.

Krafterzeugungseinrichtungen sind zum Erzeugen eines in einer bestimmten Richtung wirkenden, reversiblen Arbeitshubs vorgesehen, dessen Kraft für eine entsprechende Dosierung der abgegebenen Leistung veränderlich sein soll. Die Erfindung geht dabei ferner davon aus, daß der von der Krafterzeugungseinrichtung erzeugte Arbeitshub auf ein Kraftaufnahmesystem derjenigen Art einwirkt, das infolge von im wesentlichen linear ansteigender bzw. abnehmender elastischer Verformung eine sich hubabhängig verändernde Gegenkraft entwickelt. Typische Kraftaufnahmesysteme dieser Art sind beispielsweise Zuspannvorrichtungen von Scheibenbremsen, bei denen die beim Anpressen der Bremsbacken an die Bremsscheibe auftretende Kraft aufgrund der begrenzten Starrheit des Zuspannsystems in eine entsprechende elastische Verformung desselben umgesetzt wird, die auf die Krafterzeugungseinrichtung eine entsprechende Gegenkraft ausübt. Obgleich die erfindungsgemäße Bremsanlage mit einer Krafterzeugungseinrichtung insbesondere zur Verwendung bei derartigen Zuspannvorrichtungen für Scheibenbremsen vorgesehen ist, ist sie gleichwohl auch bei anderen Kraftaufnahmesystemen verwendbar, die in vergleichbarer Weise Gegenkräfte bei Kraftbeaufschlagung entwickeln.

Insbesondere auf dem bevorzugten Anwendungsgebiet der Erfindung, nämlich den Zuspannvorrichtungen für Scheibenbremsen, sind eine Reihe von Krafterzeugungseinrichtungen zum Aufbringen der Bremskraft bekannt. Bei für Schienenfahrzeugen vorgesehenen Zuspannvorrichtungen wird die Zuspannkraft beispielsweise von Druckluftzylindern erzeugt, deren Druckluft in der Regel von der Lokomotive erzeugt wird. Der Druckluftzylinder, dessen Aufbau bekannt ist und daher an dieser Stelle wohl keiner weiteren Erläuterung bedarf, gibt bei Druckluftbeaufschlagung seine Kraft über eine Bremszange an die jeweilige Scheibenbremse ab; diese Bremszange weist zwei Zangenhebel auf, an deren bremsscheibenseitigem Ende jeweils eine auf die Bremsscheibe einwirkende Bremsbacke sitzt und die an einem mittigen Verbindungselement sowie an einem bremsscheibenabgewandten Verbindungselement gelenkig miteinander verbunden sind, wobei mindestens eines der beiden Verbindungselemente zum Zuspannen der Zangenhebel längenveränderlich ist und zum Bremsen von der Antriebsstange des Druckluftzylinders so verstellt wird, daß die Bremszange zugespannt wird. Für nähere Einzelheiten zum Aufbau einer derartigen Bremszange und ihrer Betätigung sei z.B. auf die **DE-C 1 249 606** oder das **DE-U 17 04 651** verwiesen.

Eine alternative Zuspannvorrichtung, die u.a. auch bei Scheibenbremsen von Straßenfahrzeugen Anwendung findet, macht von einem sogenannten Schwimmsattel Gebrauch, der parallel zur Drehachse der Scheibenbremse verschiebbar gelagert ist und einerseits der Scheibenbremse eine druckluft- oder hydraulisch betätigte Krafterzeugungseinrichtung aufweist, die die diesseitige Bremsbacke, gegebenenfalls unter Zwischenschaltung einer mechanischen Kraftübersetzung, gegen die Scheibenbremse drückt, worauf der Sattel verschoben wird und dadurch auch die gegenüberliegende Bremsbacke gegen die Scheibenbremse preßt.

Bei bekannten Krafterzeugungseinrichtungen für derartige Zuspannvorrichtungen ist zum Zuspannen bzw. zum Lösen der Bremse (falls nämlich die betreffende Zuspannvorrichtung in einer sogenannten "Failsafe"-Anordnung betrieben wird, bei der bei Wegnahme bzw. Ausfall des Druckmittels ein Zuspannen erfolgt) eine vergleichsweise große Energiemenge aufzubringen, was zum einen Teil an dem relativ großen erforderlichen Arbeitshub liegt und zum anderen insbesondere darauf zurückzuführen ist, daß es sich bei einer derartigen Zuspannvorrichtung um ein sich bei Druckbeaufschlagung elastisch verformendes System handelt, das der Krafterzeugungseinrichtung eine arbeitshubabhängig bzw. bremslastabhängig zunehmende Gegenkraft entgegensetzt, deren Überwindung sehr viel Energie kostet. Es liegt auf der Hand, daß dieser hohe Energiebedarf insbesondere bei Zügen mit einer großen Anzahl von Waggons nicht zu vernachlässigen ist.

Weiterhin ist bei den bekannten Krafterzeugungseinrichtungen in Form von Druckluftzylindern oder Hydraulikzylindern die jeweils abgegebene Kraft nur über den Arbeitsdruck des Druckmittels steuerbar, was vergleichsweise schwierig ist, so daß sich beispielsweise im genannten Anwendungsbereich der Bremsanlagen von Schienenfahrzeugen ein feinfühlig dosierter Bremsvorgang kaum realisieren läßt.

Der Erfindung liegt die Aufgabe zugrunde, eine Bremsanlage mit einer Krafterzeugungseinrichtung für ein Kraftaufnahmesystem der im Oberbegriff des Anspruchs 1 angegebenen Art zu schaffen, die sich durch sehr geringen Energiebedarf und durch gute Dosierbarkeit der jeweils abgegebenen Kraft auszeichnet.

Diese Aufgabe wird durch die im Kennzeichnungsteil des Anspruchs 1 angegebenen Maßnahmen gelöst.

Die Erfindung geht von dem Grundgedanken aus, daß bei den Kraftaufnahmesystem der im Oberbegriff des Anspruchs 1 angegebenen Art, bei denen sich, wie eingangs erläutert wurde, aufgrund ihrer im wesentlichen linear ansteigenden elastischen Verformung eine sich hubabhängig verändernde Gegenkraft aufbaut, der für die Verformung erforderliche Energiebedarf minimiert werden kann, indem die erzeugte Gegenkraft dazu verwendet wird, bei der Umkehr des Arbeitshubs, d.h. beim Entspannen des Kraftaufnahmesystems, einen zum Erzeugen des Arbeitshubs verwendeten energiespeichernden Krafterzeuger wieder "aufzuladen", so daß ein entsprechend großer Teil der bei der Kraftabgabe aufgebrachten Energie zurückgewonnen wird. Die Erfindung schafft somit eine Art "Energieschaukel" zwischen den beiden Zuständen "Energie im Krafterzeuger" und "Energie im Kraftaufnahmesystem", wodurch letztlich ein sehr hoher Wirkungsgrad erzielbar ist. Indem der erfindungsgemäße energiespeichernde Krafterzeuger ferner so angeordnet wird, daß er über eine kraftübersetzende Hebeleinrichtung auf das Kraftaufnahmesystem einwirkt, wird erfindungsgemäß darüber hinaus erreicht, daß die abgegebene Kraft hervorragend dosiert werden kann.

Im einzelnen wird das der Erfindung zugrundeliegende Wirkungsprinzip der Krafterzeugungseinrichtung gemäß Kennzeichnungsteil von Anspruch 1 dadurch realisiert, daß die Hebeleinrichtung mit ihrem Hebel lager ortsfest gegenüber dem Kraftaufnahmesystem gelagert wird und über einen Kraftangriffspunkt mit vorgegebener Hebelarmlänge auf das Kraftaufnahmesystem einwirkt, daß ferner der energiespeichernde Krafterzeuger auf die Hebeleinrichtung an einer veränderbaren Position ihres Hebelarms einwirkt und daß schließlich mittels einer Verstellvorrichtung diejenige Position steuerbar geändert wird, an der der Krafterzeuger auf den Hebelarm der Hebeleinrichtung einwirkt. Versuche haben ergeben, daß die von der Verstellvorrichtung aufzubringende Energie tatsächlich wesentlich geringer ist als bei herkömmlichen Krafterzeugungseinrichtungen, wie Druckluftzylindern und dergleichen.

Gemäß der im Anspruch 2 angegebenen Weiterbildung der Erfindung wird der Krafterzeuger vorzugsweise so dimensioniert, daß in ihm mindestens diejenige Energiemenge gespeichert werden kann, die bei maximalem Hub bzw. größter Hebelarmlänge vom jeweiligen Kraftaufnahmesystem aufgenommen wird. Auf diese Weise läßt sich erreichen, daß so wenig wie möglich Energie verloren geht, so daß der Wirkungsgrad entsprechend optimiert werden kann.

Gemäß der im Anspruch 3 angegebenen Weiterbildung der Erfindung kann als energiespeichernder Krafterzeuger beispielsweise eine Federspeichervorrichtung verwendet werden. Eine derartige Federspeichervorrichtung ist als ein Standard-Bauelement anzusehen, so daß die Herstellung auf keinerlei Schwierigkeiten stößt. Alternativ kann gegebenenfalls freilich auch eine Druckluftspeichervorrichtung oder dergleichen eingesetzt werden.

Gemäß der Lehre des Anspruchs 4 empfiehlt es sich, den Krafterzeuger so anzuordnen, daß er gegenüber der Hebeleinrichtung in einem ortsfesten Lager in der Weise schwenkbar gelagert ist, daß er an einer Hebelarmfläche der Hebeleinrichtung verschwenkbar anliegt; diese Hebelarmfläche ist hierbei bezüglich des Lagers des Krafterzeugers im wesentlichen kreisbogenförmig ausgebildet. Diese Anordnung hat den Vorteil, daß die zum Ändern des Arbeitshubs der Krafterzeugungseinrichtung erforderliche Verstellvorrichtung des Krafterzeugers lediglich eine auf einfache Weise zu realisierende Schwenkbewegung durchzuführen braucht.

Für die Verstellvorrichtung können daher, je nach Anwendungsgebiet der Krafterzeugungseinrichtung, die verschiedensten Ausführungsformen verwendet werden. Beispielsweise ist es gemäß der Lehre des Anspruchs 15 möglich, einen elektrischen Verstellmotor vorzusehen, der mit dem Krafterzeuger in geeigneter Weise gekoppelt ist. Die Ankopplung an den Krafterzeuger kann zum Beispiel dadurch herbei geführt werden, daß ein vom Motor angetriebener Exzenter mit seiner Exzenterfläche an einer entsprechenden Stützfläche des Krafterzeugers anliegt, so daß je nach Drehwinkel der Motorwelle ein anderer Schwenkwinkel des Krafterzeugers erzielt wird. Alternativ hierzu ist es jedoch auch möglich, den Krafterzeuger mittels einer Pleuelantriebsvorrichtung geeignet zu verschwenken.

Darüberhinaus besteht gemäß der Lehre des Anspruchs 19 die Möglichkeit, die für die Verstellvorrichtung erforderliche Steuerkraft mittels eines Druckluftzylinders zu erzeugen, so daß es möglich ist, eine pneumatische Krafterzeugungseinrichtung zu schaffen, die sich von einer herkömmlichen pneumatischen Krafterzeugungseinrichtung ansteuerungstechnisch kaum unterscheidet, wobei der wesentliche Unterschied im deutlich geringeren Energieverbrauch und der besseren Dosierbarkeit der abgegebenen Kraft zu sehen ist.

Ein weiterer, als wesentlich anzusehender Aspekt der Erfindung liegt darin, daß die genannte Hebelarmfläche der Hebeleinrichtung so gestaltet werden kann, daß diejenige Kraft, die der Krafterzeuger zur Vergrößerung des Arbeitshubs benötigt, kleiner als Null ist; auf diese Weise wird erreicht, daß bei einem durch Druckluft- oder Stromausfall bedingten Versagen der Verstellvorrichtung in Folge dieses "Gefälles" der Hebelarmfläche eine automatische Vergrößerung des Arbeitshubs herbeigeführt wird, was bei Anwendung der vorliegenden Erfindung bei Scheibenbremsen-Zuspannvorrichtungen zur Durchführung eines automatischen Bremsvorgangs ausgenutzt werden kann ("Failsafe"-Funktion).

Alternativ hierzu ist es selbstverständlich auch möglich, an der Hebelarmfläche ein umgekehrtes "Gefälle" in Richtung zur Verkleinerung des Arbeitshubs hin vorzusehen, so daß bei Ausfall der Steuerkraft der Verstellvorrichtung automatisch der Arbeitshub "0" der Krafterzeugungseinrichtung herbeigeführt wird. Im Falle von Bremsanlagen wird eine derartige Funktion in der Praxis insbesondere bei Tunnelfahrzeugen eingesetzt, bei denen sichergestellt sein muß, daß im Falle des Bremsmittelausfalls ein Verlassen des Tunnels jederzeit möglich ist.

Das erfindungsgemäße Gefälle der Hebelarmfläche hat darüberhinaus den Vorteil, daß die gewünschte Notfall-Stellung des Arbeitshubs auch dann automatisch herbeigeführt wird, wenn die mechanische Ankopplung der Verstellvorrichtung an den Krafterzeuger beispielsweise durch Bruch des mechanischen Koppelglieds ausfällt.

Erfindungsgemäß besteht darüberhinaus gegebenenfalls die Möglichkeit, die Kurvenform der Hebelarmfläche so zu ändern, daß trotz der elastischen Dehnung aller Kraftübertragungsteile nur ein minimaler Hub des Krafterzeugers erforderlich ist. Auf diese Weise ist es unter Umständen möglich, die Energiebilanz weiter zu verbessern.

Es empfiehlt sich, den jeweiligen Schwenkwinkelbereich des Krafterzeugers so zu wählen, daß der Krafterzeuger in der dem Arbeitshub "0" entsprechenden Stellung an einer Position der Hebelarmfläche der Hebeleinrichtung anliegt, in der die Hebelarmlänge in Bezug zur Arbeitshubrichtung kleiner oder gleich Null ist. Durch diese "Parkposition" des Krafterzeugers wird unabhängig vom jeweils gewählten Gefälle der Hebelarmfläche eine definierte Anfangsstellung erreicht.

Gemäß einer anderen Weiterbildung der Erfindung empfiehlt es sich, den Krafterzeuger über ein entsprechend gestaltetes Gleitelement mit der Hebelarmfläche verschiebbar zu koppeln, wobei zu diesem Zweck insbesondere eine am hebelseitigen Ende des Krafterzeugers gelagerte Rolle vorgesehen werden kann.

Um zu erreichen, daß der Hebelarm der Hebeleinrichtung nicht über die jeweils gewünschten Endlagen hinaus verschwenkt werden kann, empfiehlt es sich gemäß der Lehre des Anspruchs 10, den Hebelarm an entsprechend plazierten ortsfesten Anschlägen anliegen zu lassen.

Der Kraftangriffspunkt, über den die Hebeleinrichtung auf das Kraftaufnahmesystem einwirkt, kann sowohl am Hebelarm der Hebeleinrichtung vorgesehen werden als auch an einem zusätzlichen, an der Hebeleinrichtung ausgebildeten Exzenter. Die Kraftübertragung von diesem Angriffspunkt hin zu einer Druck- oder Zug-Stange kann beispielsweise über ein Gelenk oder dergleichen erfolgen.

Das Hebel lager der Hebeleinrichtung kann im einfachsten Fall als Lagerbuchse ausgebildet sein, obgleich gegebenenfalls auch Gleit- oder Rollenlager hierfür in Frage kommen. Gemäß der im Anspruch 14 angegebenen Weiterbildung der Erfindung ist es in manchen Anwendungsfällen von Vorteil, das Hebellager als Halbschalenlager auszubilden, wobei in diesem Fall der sich an der Hebelarmfläche abstützende Krafterzeuger die Hebeleinrichtung an der dem Halbschalenlager gegenüberliegenden Seite einspannt und somit verhindert, daß die Hebeleinrichtung aus dem Halbschalenlager fällt.

Ein weiterer, als wesentlich angesehener Gesichtspunkt der Erfindung liegt darin, daß die vom Krafterzeuger jeweils abgegebene Kraft im Gegensatz zu herkömmlichen Einrichtungen auf äußerst einfache Weise gemessen werden kann, indem der momentane Schwenkwinkel des Krafterzeugers erfaßt und/oder indem der momentane Arbeitshub gemessen wird. Gemäß der Lehre der Ansprüche 20 und 21 kann die erstgenannte Variante auf einfache Weise mittels eines Sensors erreicht werden, der entweder diejenige Position erfaßt, an der der Krafterzeuger auf den Hebelarm der Hebeleinrichtung einwirkt, oder der den momentanen Schwenkwinkel des Krafterzeugers erfaßt. In der zweitgenannten Variante kann gemäß der Lehre der Ansprüche 22 und 23 ein Sensor vorgesehen werden, der den momentanen Arbeitshub entweder direkt oder über die momentane Winkellage des Hebelarms der Hebeleinrichtung erfaßt.

Insbesondere bei der Verwendung der erfindungsgemäßen Einrichtung als Zuspannvorrichtung einer Scheibenbremse empfiehlt es sich, beide oben genannten Varianten der Krafterfassung vorzusehen, da in diesem Fall aus einer Differenz der beiden Ausgangssignale der Sensoren ein eventueller Belagverschleiß der Bremsbacken bestimmt werden kann. Wenn nämlich ein Verschleiß der Bremsbacken aufgetreten ist, geraten die Bremsbacken erst zu einem späteren Zeitpunkt bzw. bei einer anderen Winkellage des Hebelarms in Anlage an die Bremsscheibe, so daß die elastische Verformung der Zuspannvorrichtung, die sich im Arbeitshub widerspiegelt, erst zu einem entsprechend späteren Zeitpunkt auftritt. Das Differenzsignal der beiden Sensoren kann folglich zur Ansteuerung einer Nachstelleinrichtung herangezogen werden.

Wenn die erfindungsgemäße Einrichtung für eine einen Schwimmsattel aufweisende Zuspannvorrichtung verwendet wird, empfiehlt es sich gemäß der Lehre des Anspruchs 25, das Ende der mit dem Kraftangriffspunkt gekoppelten Stange der Krafterzeugungseinrichtung gegen die im Schwimmsattel gelagerte Bremsbacke einwirken zu lassen. Auf diese Weise ergibt sich eine besonders einfache Bauform der Zuspannvorrichtung.

Wenn die erfindungsgemäße Einrichtung hingegen für eine eine Bremszange aufweisende Zuspannvorrichtung verwendet wird, kann die Krafterzeugungseinrichtung alternativ entweder das mittige Verbindungselement der beiden Zangenhebel oder das bremsscheibenabgewandte Verbindungselement bilden. Das jeweils andere Verbindungselement der beiden Zangenhebel wird in diesem Fall vorzugsweise von einer Verschleißnachstelleinrichtung gebildet. Gemäß der Lehre des Anspruchs 29 kann eine besonders platzsparende und einfach herzustellende Anordnung in diesem Fall dann erzielt werden, wenn der schwenkbare Krafterzeuger koaxial zu einem der beiden Drehlager des mittigen bzw. bremsscheibenabgewandten Verbindungselements des entsprechenden Zangenhebels der Bremszange gelagert wird. Auf diese Weise kann gegebenenfalls ein einziger Bolzen zur Lagerung des Zangenhebels und des Krafterzeugers ausreichend sein. Allerdings ist bei dieser Lagerungsvariante des Krafterzeugers anzustreben, dessen Achse in Bezug zur Hebelarmfläche der Hebeleinrichtung so anzuordnen, daß kein Knickmoment auf ihn ausgeübt wird.

Allgemein ist es nach der Lehre des Anspruchs 32 möglich, bei Verwendung der Erfindung für eine der oben genannten Zuspannvorrichtungen die Hebelarmfläche der Hebeleinrichtung in vorteilhafter Weise so zu formen, daß der Anlegehub zum Überwinden des Lüftspiels bereits mit einer geringfügigen Schwenkbewegung des Krafterzeugers durchgeführt werden kann. D.h., die Hebelarmfläche weist z.B. eine progressiv "abnehmende" Steigung in Anlegerichtung auf. Hierdurch ist es möglich, den Anlegehub sehr schnell durchzuführen, so daß für den Bremsvorgang ein entsprechend größerer Variationsbereich der jeweils erzeugten Kraft zur Verfügung steht.

Die Erfindung wird nunmehr nachstehend anhand der Beschreibung von Ausführungsbeispielen unter Bezugnahme auf die Zeichnungen näher erläutert. Es zeigen:
Fig.1 ein erstes Ausführungsbeispiel der erfindungsgemäßen Einrichtung;
Fig.2 eine abgewandelte Ausführungsform der in Fig.1 gezeigten Krafterzeugungseinrichtung, die in einer Schwimmsattel-Scheibenbremse die zum Bremsen erforderliche Zuspannkraft erzeugt;
Fig.3A bis 3C und Fig.4A bis 4C jeweils zwei Kraft/Zeit-Diagramme und ein Leistungs/Zeit-Diagramm zur Erläuterung der beim Zuspannen und Lösen auftretenden Kräfte und des Energieverbrauchs bei Verwendung einer herkömmlichen (Fig.3) und einer erfindungsgemäßen Einrichtung (Fig.4);
Fig.5A und 5B eine Ausführungsform der erfindungsgemäßen Einrichtung als Zuspannvorrichtung einer eine Bremszange aufweisenden Scheibenbremse;
Fig.6A bis 6C drei Varianten einer für die in Fig.5 gezeigte Krafterzeugungseinrichtung geeigneten Verstellvorrichtung zum Ändern der Bremskraft;
Fig.7 den schematischen Aufbau einer abgewandelten Ausführungsform der in Fig.5 gezeigten Krafterzeugungseinrichtung, die im mittigen Verbindungselement der beiden Zangenhebel der Bremszange angeordnet ist; und
Fig.8 eine abgewandelte Ausführungsform der in Fig.7 dargestellten Zuspannvorrichtung.

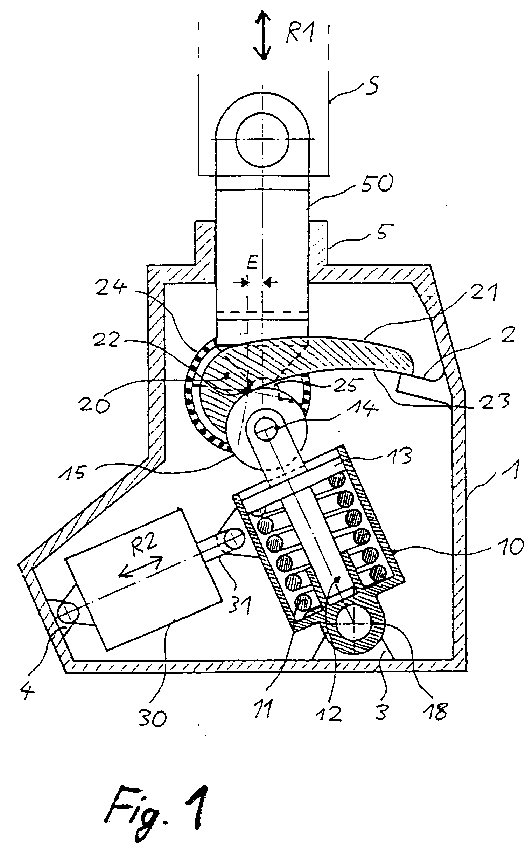

In Fig.1 ist schematisch der prinzipielle Aufbau eines ersten Ausführungsbeispiels der erfindungsgemäßen Einrichtung dargestellt; die Krafterzeugungseinrichtung erzeugt einen reversiblen Arbeitshub, der in Richtung eines mit **R1** bezeichneten Pfeils auf ein lediglich schematisch dargestelltes Kraftaufnahmesystem **S** einwirkt. Das Kraftaufnahmesystem S hat die Eigenschaft, in Abhängigkeit vom jeweiligen Arbeitshub der erfindungsgemäßen Krafterzeugungseinrichtung aufgrund elastischer Verformung eine entsprechende Gegenkraft zu erzeugen.

Die Krafterzeugungseinrichtung ist in einem Gehäuse **1** untergebracht, das gegenüber dem Kraftaufnahmesystem **S** ortsfest gelagert ist. Das Gehäuse **1** weist in seinem dem Kraftaufnahmesystem **S** zugewandten Gehäuseteil eine als Führung ausgebildete Ausnehmung **5** auf, in der eine Druck- bzw. Zugstange **50** gleitend geführt ist. Die Stange **50** ist über ein nicht näher gezeigtes Koppelelement mit dem Kraftaufnahmesystem **S** gekoppelt. Das gehäuseinnere Ende der Stange **50** ist mit einem Exzenter **25** einer Drehhebeleinrichtung **20** drehbar gekoppelt. Die Drehhebeleinrichtung **20** ist ihrerseits in einem gehäusefesten Lager **24** drehbar gelagert. Die Drehhebeleinrichtung **20** weist ferner einen Hebelarm **21** auf, der in der in Fig.1 dargestellten Ruhestellung an einem gehäusefesten Anschlag **2** aufliegt.

An der der Stange **50** abgewandten Stirnseite des Gehäuses **1** ist ein Lagerbock **3** vorgesehen, an dem ein energiespeichernder Krafterzeuger **10** mittels eines Lagers **18** schwenkbar gelagert ist. Der im folgenden als "Kraftpatrone" bezeichnete Krafterzeuger **10** bildet eine Federspeichervorrichtung und besteht im wesentlichen aus einem zylindrischen Gehäuse, das eine Spiralfeder **11** aufnimmt. Am unteren Ende des Gehäuses der Kraftpatrone **10** ist konzentrisch eine innenzylindrische Führung ausgebildet, in der eine Druckstange **12** gleitend gelagert ist, an der eine Druckaufnahmescheibe **13** sitzt, die durch die Innenwandungen des Gehäuses der Kraftpatrone **10** geführt ist und die von der Feder **11** ausgeübte Druckkraft auf die Druckstange **12** überträgt. Am äußeren Ende der Druckstange **12** ist ein Lager **14** ausgebildet, in dem eine Rolle **15** drehbar gelagert ist.

An der gemäß Fig.1 linken Seitenwand der Kraftpatrone **10** ist ein Steuerglied **31** gelenkig angekoppelt, das die von einer Verstellvorrichtung **30** erzeugte, in Richtung eines mit **R2** bezeichneten Pfeils wirkende Stellkraft auf die Kraftpatrone **10** überträgt. Der jeweilige Hub des Steuerglieds **31** in Bezug zu einer gehäusefesten Lagerung **4** der Verstellvorrichtung **30** ist direkt proportional zu der an der Stange **50** abgegebenen Kraft der Krafterzeugungseinrichtung.

Die Verstellvorrichtung **30** ist in der Lage, im Ansprechen auf ein elektrisches, pneumatisches oder auch hydraulisches Steuersignal die Kraftpatrone **10** in die jeweils gewünschte Lage zu verschwenken.

An der der Kraftpatrone **10** zugewandten Seite weist der Hebelarm **21** der Hebeleinrichtung **20** eine Hebelarmfläche **23** auf, an der die Rolle **15** der Druckstange **12** der Kraftpatrone **10** bei deren Schwenkbewegung abrollt. In der in Fig.1 gezeigten Ruhestellung, in der die Krafterzeugungseinrichtung keine Kraft abgibt, wirkt die Kraft der Feder **11** direkt auf den mit **22** bezeichneten Drehpunkt des Hebelarms **21** ein, so daß die effektive Hebelarmlänge gleich Null ist. Es sei darauf hingewiesen, daß diese Endstellung der Kraftpatrone **10** auch so gewählt werden kann, daß die effektive Hebelarmlänge einen geringfügig negativen Wert annimmt, so daß der Hebelarm **21** mit einer bestimmten Kraft gegen den Anschlag **2** des Gehäuses **1** gedrückt wird.

Nachfolgend wird die Funktionsweise der in Fig.1 gezeigten Krafterzeugungseinrichtung näher erläutert. Bei der dargestellten Ruhelage der Kraftpatrone **10** ist die effektive Hebelarmlänge, wie erwähnt, im wesentlichen gleich Null, so daß die den Arbeitshub auf das Kraftaufnahmesystem **S** übertragende Stange **50** ihre unterste Stellung einnimmt. Sobald die Verstellvorrichtung **30** beginnt, die Kraftpatrone **10** über das Steuerglied **31** nach rechts zu verschwenken, wird der Exzenter **25** und damit die Stange **50** zum Kraftaufnahmesystem **S** hin gedrückt, wobei die entsprechende Wegstrecke dem Verhältnis der jeweiligen Schwenkstrecke der Kraftpatrone **10** zu der mit E bezeichneten Exzentrizität des Exzenters **25** zum Drehpunkt **22** der Hebeleinrichtung **20** entspricht. Die auf das Kraftaufnahmesystem **S** übertragene Kraft steigt somit proportional zum Schwenkwinkel der Kraftpatrone **10** an. Die auf das Kraftaufnahmesystem **S** übertragene Energie wird dabei ausschließlich von der Feder **11** der Kraftpatrone **10** abgegeben, sofern das "Gefälle" der Hebelarmfläche **23** in Bezug zur Verstellvorrichtung **30** größer gleich Null ist. Wenn das Gefälle der Hebelarmfläche **23** hingegen zur Verstellvorrichtung **30** hin gerichtet ist, wird eine geringfügige Kraft zum Verschwenken der Kraftpatrone **10** benötigt.

Wenn die Verstellvorrichtung **30** die Kraftpatrone **10** über das Steuerglied **31** zum Verringern der auf das Kraftaufnahmesystem **S** einwirkenden Kraft wieder nach links verschwenkt, wird die im Kraftaufnahmesystem **S** durch dessen elastische Verformung gespeicherte Energie über den Hebelarm **21** auf die Kraftpatrone **10** übertragen, so daß deren Feder **11** zumindest teilweise durch die im Kraftaufnahmesystem **S** gespeicherte Energie gespannt wird; die Verstellvorrichtung **30** benötigt daher entsprechend weniger Energie zum Spannen der Feder **11**, so daß der Gesamt-Energieverbrauch zum Vergrößern und Verkleinern des Arbeitshubs entsprechend gering ist. Die Krafterzeugungseinrichtung arbeitet daher mit sehr hohem Wirkungsgrad bzw. benötigt lediglich eine geringe Steuerkraft für die Verstellvorrichtung **30**.

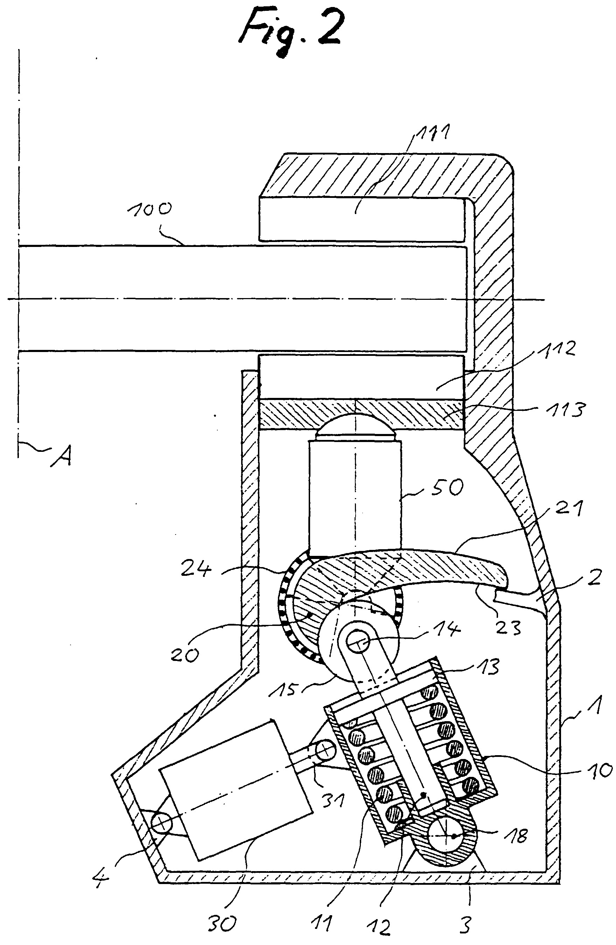

In Fig.2 ist eine Schwimmsattel-Scheibenbremse gezeigt, in der die Krafterzeugungseinrichtung der Fig.1 die erforderliche Zuspannkraft erzeugt. Die Krafterzeugungseinrichtung hat, wie aus einem Vergleich der Fig.1 und 2 hervorgeht, den gleichen Aufbau, so daß, da auch die gleichen Bezugszeichen verwendet sind, auf eine erneute Erläuterung ihrer Bestandteile und Funktion verzichtet werden kann. Das Gehäuse 1 der Krafterzeugungseinrichtung bildet in dieser Ausführungsform gleichzeitig den Schwimmsattel der Scheibenbremse, der mittels eines nicht dargestellten Schiebelagers entlang einer mit **A** bezeichneten Achse einer Bremsscheibe **100** verschiebbar gelagert ist.

Die den Arbeitshub der Krafterzeugungseinrichtung übertragende Stange **50** weist an ihrem bremsscheibenseitigen Ende ein halbkugelförmiges Druckstück auf, das in eine entsprechende Ausnehmung einer Druckplatte **113** einer Bremsbacke **112** eingreift. Die Stange **50** wird daher von der Druckplatte **113** gelagert, so daß auf eine zusätzliche Führung verzichtet werden kann.

Wenn die Verstellvorrichtung **30** die Kraftpatrone **10** nach rechts verschwenkt, wird die Bremsbacke **112** gegen die in Fig.2 unten gezeigte Seite der Bremsscheibe der Bremsscheibe **100** gepreßt. Beim weiteren Verschwenken der Kraftpatrone **10** wird der Schiebesattel **1** aufgrund der nunmehr anliegenden Bremsbacke **112** nach unten verschoben, so daß kurz darauf auch die andere Bremsbacke **111** an der gegenüberliegenden Seite der Bremsscheibe **100** anliegt. Bei noch weiterem Verschwenken der Kraftpatrone **10** wird ein dem Schwenkwinkel entsprechender Bremsdruck aufgebaut, wobei gleichzeitig eine elastische Verformung der Zuspannvorrichtung und des Schiebesattels **1** auftritt. Wenn die Kraftpatrone **10** zum Lösen der Bremse wieder nach links geschwenkt wird, wird die in dieser elastischen Verformung gespeicherte Energie zu einem erheblichen Teil in die Feder **11** der Kraftpatrone **10** zurückgespeichert, so daß insgesamt ein hoher Wirkungsgrad beim Bremsen erzielt wird.

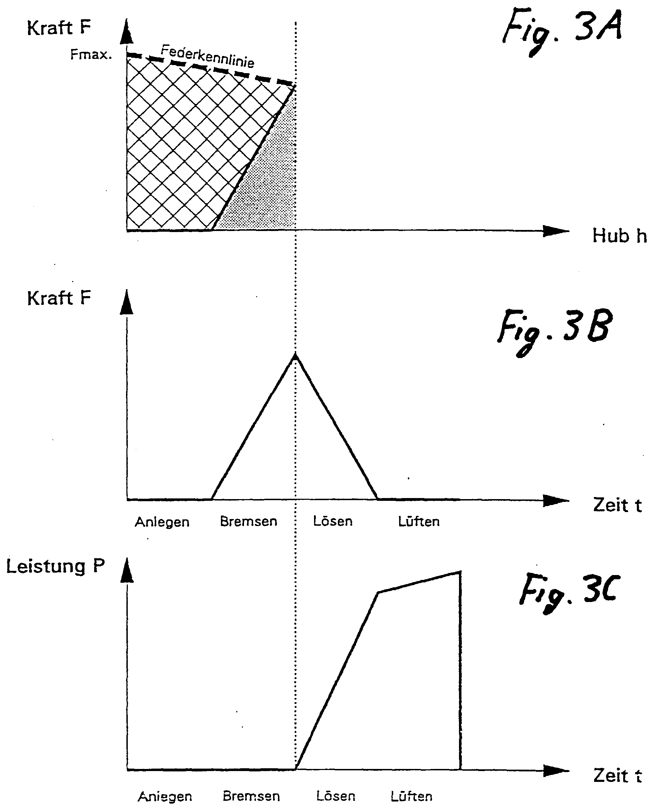

In den Fig.3A bis 3C sind die Kraft- und Leistungsverhältnisse beim Brems- und Lösevorgang dargestellt, wenn als Zuspannvorrichtung ein herkömmlicher Druckluft-Bremszylinder verwendet wird, wobei davon ausgegangen wird, daß eine "Failsafe"-Anordnung vorliegt, wie sie insbesondere bei Schienenfahrzeugen verwendet wird. Wie aus Fig.3A hervorgeht, bringt die Feder des Druckluftzylinders beim Bremsen eine Arbeit auf, die dem unter der Federkennlinie dargestellten schraffierten Gebiet entspricht. Beim Lösen der Bremse muß daher durch Zufuhr von Druckluft soviel Energie aufgewendet werden, daß die Feder des Druckluftzylinders wieder gespannt wird. Der hierzu erforderliche Energiebetrag ergibt sich aus dem Flächeninhalt der in Fig.3C dargestellten Leistungskurve.

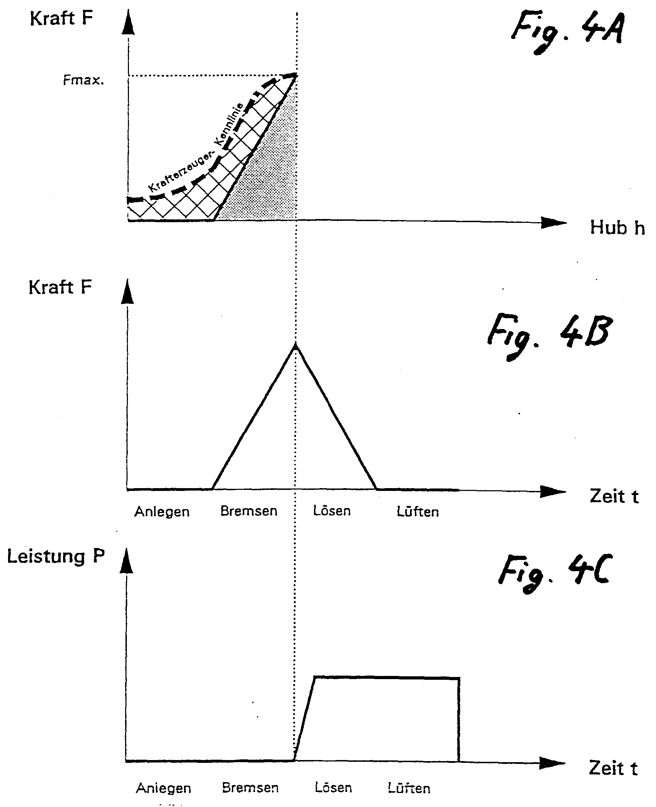

In Fig.4A bis 4C sind die entsprechenden Kraft- bzw. Leistungsverhältnisse bei Verwendung der erfindungsgemäßen Einrichtung als Zuspannvorrichtung dargestellt. Aus einem Vergleich von Fig.4C mit Fig. 3C ist unmittelbar ersichtlich, daß der Energiebedarf der erfindungsgemäßen Einrichtung wesentlich günstiger als bei Verwendung eines herkömmlichen Druckluftzylinders oder dergleichen ist. Dies ist auf die erfindungsgemäße Verwendung der in der elastischen Verformung gespeicherten Kraft zum Zuspannen der Kraftpatrone zurückzuführen.

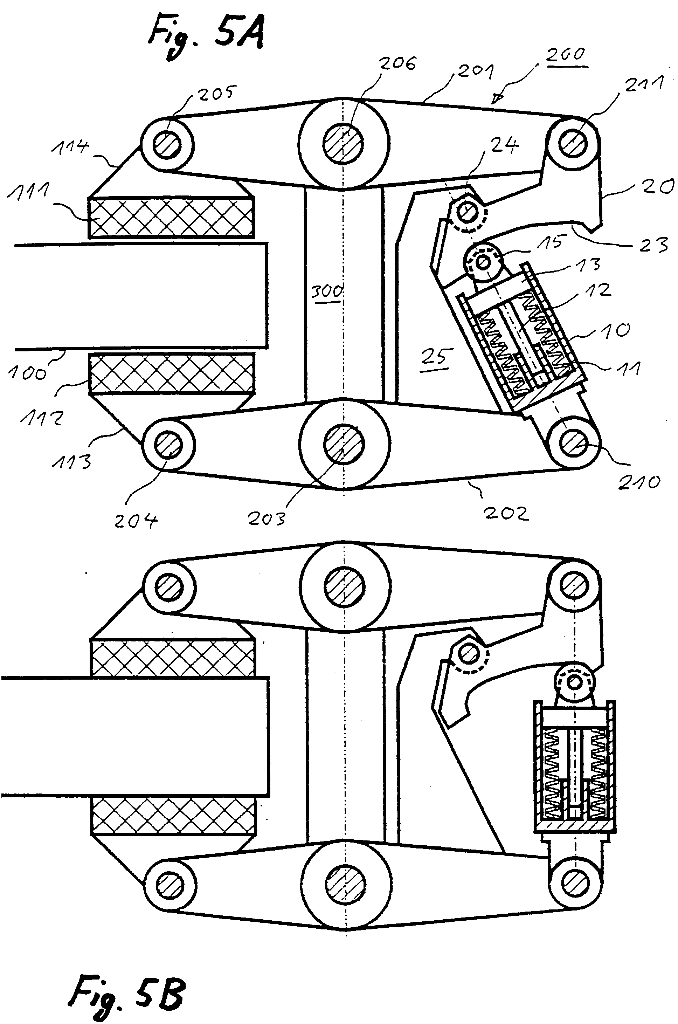

In den Fig.5A und 5B ist eine Ausführungsform der erfindungsgemäßen Einrichtung dargestellt, die als Zuspannvorrichtung einer eine Bremszange aufweisenden Scheibenbremse dient. Die Bremszange ist hierbei aus zwei Zangenhebeln **201** bzw. **202** gebildet, die über zwei Gelenklager **203** und **206** an einem mittigen Verbindungselement **300** abgestützt sind. An dem einer Bremsscheibe **100** zugewandten Ende weist jeder Zangenhebel ein Lager **204** bzw. **205** auf, an dem ein Druckstück **113** bzw. **114** drehbar gelagert ist, an dessen bremsscheibenseitigem Ende eine Bremsbacke **112** bzw. **111** befestigt ist. Am bremsscheibenabgewandten Ende des oberen Zangenhebels **201** ist eine Hebeleinrichtung **20** an einem Lager **211** drehbar gelagert, sie ist darüber hinaus mittels eines Lagers **24** an einem Stützelement **25** drehbar gelagert, das mit dem gegenüberliegenden Zangenhebel **202** starr verbunden ist. Der Hebelarm der Hebeleinrichtung **20** weist an seiner dem Stützelement **25** zugewandten Seite eine Endfläche auf, die an einer entsprechenden Fläche des Stützelements **25** anliegt, so daß ein Endanschlag gebildet wird. Am bremsscheibenabgewandten Ende des unteren Zangenhebels **202** ist in einem Lager **210** eine Kraftpatrone **10** gelagert, deren Aufbau der in Fig.1 gezeigten Kraftpatrone entspricht, so daß auf die dortige Beschreibung verwiesen wird. Die Rolle **15** der Druckstange **12** der Kraftpatrone **10** läuft ebenfalls in einer geeignet geformten Hebelarmfläche **23**. Die Kraftpatrone **10** kann mittels einer in den Fig.5A und 5B nicht näher gezeigten Verstellvorrichtung verschwenkt werden.

In Fig.5A ist die Scheibenbremse **200** in ihrer Lösestellung gezeigt, in der die beiden Bremsbacken **111** und **112** einen vorbestimmten Abstand (Lüftspiel) zur Oberfläche der Bremsscheibe **100** aufweisen. Wenn die Verstellvorrichtung die Kraftpatrone **10** nach rechts verschwenkt, wird das Lüftspiel der Bremsbacken überwunden, so daß bei weiterem Verschwenken der Kraftpatrone **10** ein entsprechender Bremsdruck auf die Bremsscheibe **100** ausgeübt wird. In Fig.5B ist die Vollbrems-Stellung dargestellt, in der der maximale Bremsdruck aufgebracht wird und in der daher die maximale elastische Verformung der Bremszange auftritt. Wenn die Kraftpatrone **10** zum Lösen der Bremse wieder nach links geschwenkt wird, wird ein großer Teil der in der elastischen Verformung gespeicherten Energie auf die Feder **11** der Kraftpatrone **10** übertragen, wodurch ein guter Wirkungsgrad erzielbar ist.

Falls bei der Fig.5 gezeigten Scheibenbremse eine "Failsafe"-Funktion gewünscht ist, wird das Gefälle der Hebelarmfläche **23** so gewählt, daß es in Fig.5 nach rechts gerichtet ist, so daß bei Ausfall der Verstellvorrichtung ein automatischer Schwenkhub der Kraftpatrone **10** nach rechts erfolgt, wodurch der in Fig.5B gezeigte Vollbrems-Zustand eingenommen wird.

Das mittige Verbindungselement **300** kann als Verschleißnachsteller ausgebildet sein, der bei zunehmendem Abrieb der Bremsbacken **111** und **112** den Abstand zwischen den beiden Lagern **203** und **206** soweit verkürzt, daß das Lüftspiel im wesentlichen konstant bleibt. Der Aufbau eines derartigen Nachstellers ist bekannt und für die Erfindung nicht weiter von Bedeutung.

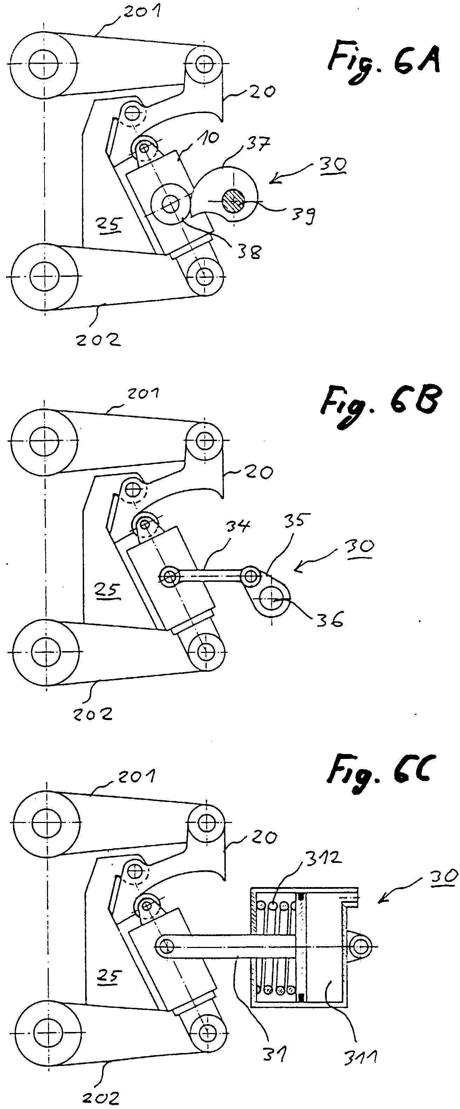

In den Fig.6A bis 6C sind drei Varianten einer Verstellvorrichtung dargestellt, die zum Verschwenken der Kraftpatrone **10** der in Fig.5 gezeigten Zuspannvorrichtung verwendet werden können. Gemäß Fig.6A kann beispielsweise ein Exzenter **37** vorgesehen werden, der über eine motorisch oder in anderer Weise angetriebene Welle **39** gedreht werden kann. Die kreisförmig gestaltete Außenfläche des Exzenters **37** liegt an einer Rolle **38** an, die am Gehäuse der Kraftpatrone **10** gelagert ist. Wenn der Exzenter **37** von der Welle **39** gemäß der Darstellung in Fig.6A nach links gedreht wird, wird der Abstand zum Lager der Rolle **38** entsprechend verkürzt, so daß die Kraftpatrone **10** aufgrund des nach rechts gerichteten Gefälles der Hebelarmfläche nach rechts schwenkt. Bei Drehung des Exzenters **37** in der entgegengesetzten Richtung wird die Kraftpatrone **10** wieder nach links geschwenkt, wodurch die Bremszange wieder geöffnet wird.

Bei der in Fig.6B gezeigten Variante der Verstellvorrichtung **30** ist die Kraftpatrone **10** über eine Pleuelstange **34** mit einem motorisch drehbaren Pleuelelement **35** verbunden, so daß eine Drehung der Welle **36** des Pleuelelements **35** in eine exakt gleich große Verschwenkung der Kraftpatrone **10** umgesetzt wird.

Gemäß Fig.6C kann als Verstellvorrichtung auch ein Druckluftzylinder verwendet werden, der bei Druckluftbeaufschlagung einer Druckkammer **311** eine mit der Kraftpatrone **10** gekoppelte Antriebsstange **31** entgegen der Kraft einer Feder **312** nach links verschiebt, wodurch die Bremszange geöffnet wird. Bei Wegnahme oder Ausfall der Druckluft wird die Kraftpatrone **10** demgegenüber aufgrund der internen Feder der Kraftpatrone, der Feder **312** des Druckluftzylinders sowie gegebenenfalls des Gefälles des Hebelarms nach rechts geschwenkt und spannt daher die Bremszange zu.

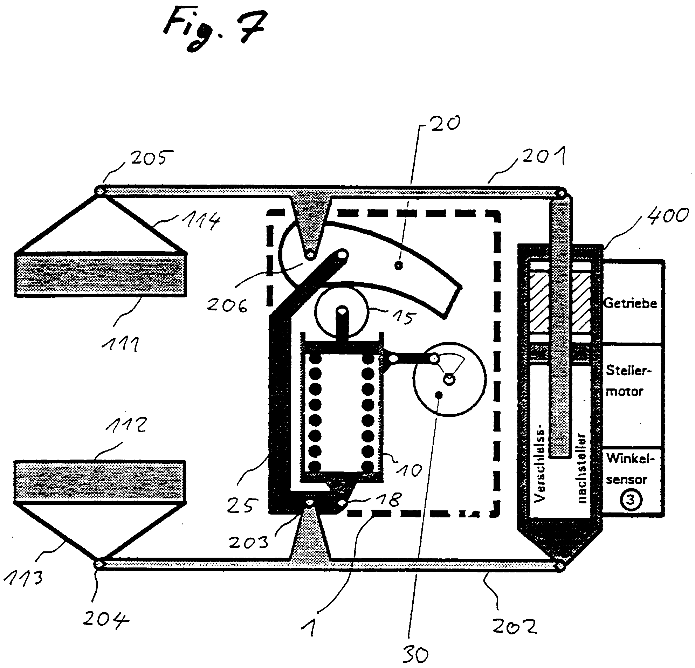

In Fig.7 ist eine weitere Ausführungsform der erfindungsgemäßen Einrichtung dargestellt, die ebenfalls für eine Scheibenbremse mit einer Bremszange als Zuspannvorrichtung vorgesehen ist. Die Bremszange hat den gleichen Aufbau und die gleiche Wirkungsweise wie die Bremszange des Ausführungsbeispiels der Fig.5, so daß diesbezüglich auf die dortigen Ausführungen verwiesen werden darf. Im Gegensatz zu der Bremszange der Fig.5 wird in Fig.7 die Zuspannkraft jedoch über das mittige Verbindungselement der beiden Zangenhebel **201** und **202** zugeführt, während das bremsscheibenabgewandte Verbindungselement durch eine Nachstelleinrichtung **400** gebildet ist.

Gemäß Fig.7 ist das mittlere Lager **203** des unteren Zangenhebels **202** an einem Stützelement **25** der erfindungsgemäßen Einrichtung **1** gelagert, während das mittlere Lager **206** des oberen Zangenhebels **201** exzentrisch an der Hebeleinrichtung **20** der Krafterzeugungseinrichtung **1** gelagert ist. Das ortsfeste Lager der Hebeleinrichtung **20** ist am oberen Ende des Stützelements **25** vorgesehen, wobei das Stützelement **25** gemäß Fig.7 so geformt ist, daß die Rolle **15** der Kraftpatrone **10** im gelösten Zustand der Bremse unmittelbar "unterhalb" des Drehlagers der Hebeleinrichtung **20** liegt, so daß die Hebelarmlänge gleich Null ist. Am unteren Tragarm des Stützelements **25** ist darüberhinaus das Drehlager der Kraftpatrone **10** vorgesehen. Eine entsprechend der Ausführungsform der Fig.6B als Pleuelantrieb ausgebildete Verstellvorrichtung **30** verschwenkt die Kraftpatrone **10** zum Zuspannen der Bremszange nach rechts, wodurch der Abstand zwischen den beiden Lagern **203** und **206** des unteren bzw. oberen Zangenhebels um eine entsprechend den Hebelgesetzen verringerte Strecke verkürzt wird, wodurch die Bremszange die beiden Bremsbacken **111** und **112** gegen die nicht gezeigte Bremsscheibe drückt. Beim anschließenden Lösen der Bremse schwenkt die Verstellvorrichtung **30** die Kraftpatrone **10** wieder nach links, wobei die Feder **11** der Kraftpatrone **10** durch die in der elastischen Verformung der Bremszange gespeicherte Energie erneut gespannt wird.

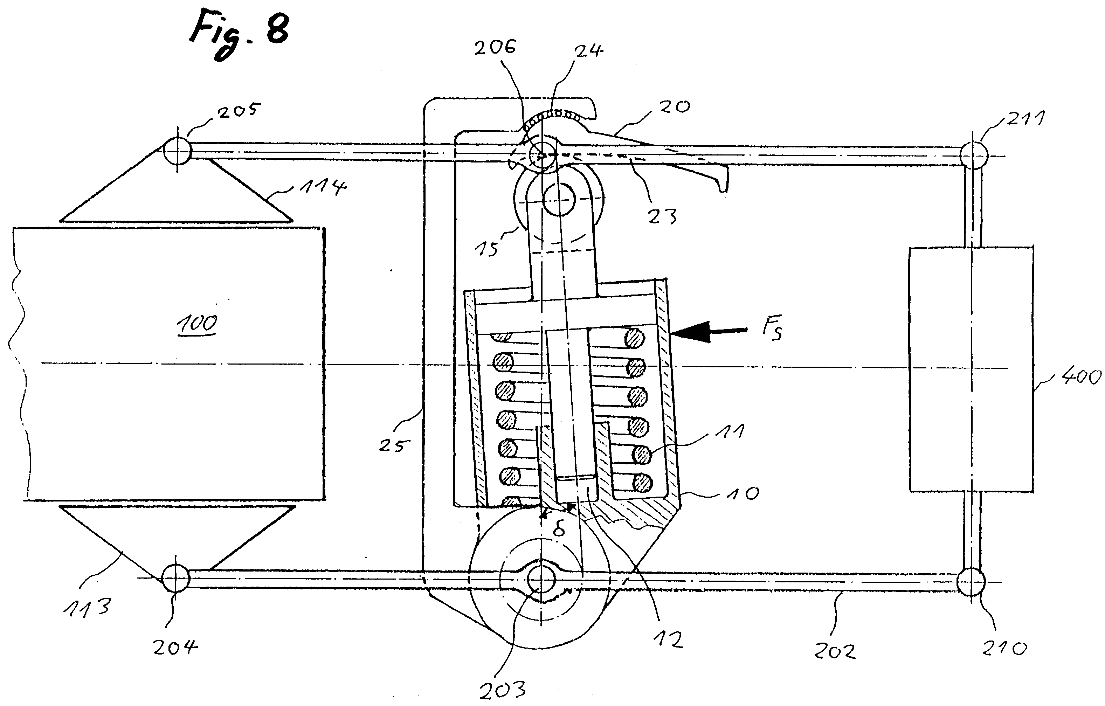

In Fig.8 ist eine modifizierte Ausführungsform der in Fig.7 dargestellten Bremszange gezeigt. Ein erster Unterschied zu der Ausführungsform der Fig.7 besteht darin, daß das Schwenklager der Kraftpatrone **10** koaxial zu dem Lager **203** des unteren Zangenhebels **202** ausgebildet ist; d.h. das Lager **203** kann auch als gemeinsames Lager für beide Teile ausgebildet sein. Um zu vermeiden, daß die Druckstange **12** der Kraftpatrone **10** einem Knickmoment ausgesetzt wird, läuft die Achse der Druckstange **12** nicht durch den Mittelpunkt des Lagers **203**, sondern ist gegenüber diesem um einen Winkel δ verschoben. Der Winkel δ ist hierbei so gewählt, daß der Kraftvektor der von der Kraftpatrone **10** auf den Hebel **20** ausgeübten Kraft im wesentlichen durch die Achse der Druckstange **12** läuft.

In weiterer Abwandlung zum Ausführungsbeispiel der Fig.7 ist der Hebel **20** der in Fig.8 gezeigten Krafterzeugungseinrichtung am oberen Ende des Stützelements **25** in einem Halbschalenlager **24** gelagert, wobei die Rolle **15** der Druckstange **12** der Kraftpatrone **10** die erforderliche Einspannung des Hebels **20** bewirkt. Durch diese Ausgestaltung des Lagers ist es möglich, eine vergleichsweise große Lagerdimensionierung zu erzielen, so daß entsprechend hohe Kräfte erzeugt werden können und ein guter Wirkungsgrad der Lagerung gewährleistet ist.

Bei sämtlichen vorstehend beschriebenen Ausführungsbeispielen der erfindungsgemäßen Einrichtung ist es möglich, einen Sensor vorzusehen, der diejenige Position erfaßt, an der die Rolle **15** der Kraftpatrone **10** am Hebelarm **21** anliegt. Da diese Position der jeweiligen Hebelarmlänge entspricht, ist das Ausgangssignal des Sensors direkt proportional zu der abgegebenen Kraft. Der genannte Sensor kann beispielsweise als Winkelsensor ausgebildet sein, der den momentanen Schwenkwinkel der Kraftpatrone **10** direkt erfaßt. Alternativ hierzu könnte auch ein Sensor vorgesehen sein, der den jeweiligen Hub der Verstellvorrichtung **30** erfaßt und einen entsprechendes Ausgangssignal erzeugt.

Weiterhin kann bei allen Ausführungsbeispielen der erfindungsgemäßen Einrichtung ein Sensor vorgesehen werden, der den momentanen Schwenkwinkel des Hebels **20** oder den jeweils erzeugten Arbeitshub erfaßt. Das entsprechende Ausgangssignal eines derartigen Sensors ist somit proportional zum Arbeitshub. Da sich der Arbeitshub in Abhängigkeit vom jeweiligen Verschleiß der Bremsbacken ändert, kann aus diesem Signal auf den jeweiligen Abrieb der Bremsbacken geschlossen werden, so daß die Nachstelleinrichtung entsprechend angesteuert werden kann. Durch Vergleich des Ausgangssignals des Arbeitshub-Sensors mit dem des Sensors zum Erfassen der Arbeitsposition der Kraftpatrone **10** kann der Verschleiß der Bremsbacken gegebenenfalls noch präziser ermittelt werden.

Selbstverständlich sind die verschiedensten Abwandlungen zu den oben erläuterten Ausführungsformen der Erfindung möglich. So kann insbesondere die jeweilige Kurvenform der Lauffläche des Hebels **20** den besonderen Verhältnissen des jeweiligen Kraftaufnahmesystems angepaßt werden. Auch die Art und Dimensionierung der Lagerung des Hebels **20** hängt vom jeweiligen Anwendungszweck ab.

Weiter ist darauf hinzuweisen, daß die Hebelarmfläche des Hebels **20** so geformt werden kann, daß der Anlegehub zum Überwinden des Lüftspiels bereits mit einer geringfügigen Schwenkbewegung der Kraftpatrone **10** durchgeführt werden kann. Die Hebelarmfläche wird zu diesem Zweck z.B. mit einer progressiv "abnehmenden" Steigung in Anlegerichtung versehen. Hierdurch ist es möglich, den Anlegehub sehr schnell durchzuführen, so daß für den Bremsvorgang ein entsprechend größerer Variationsbereich der jeweils erzeugten Kraft zur Verfügung steht.

Alternativ oder zusätzlich zu dieser Maßnahme kann der jeweilige Verschleißnachsteller **300** bzw. **400** so ausgebildet sein, daß das schnelle Anlegen vom Verschleißnachsteller durchgeführt wird, während die erfindungsgemäße Krafterzeugungseinrichtung im wesentlichen die variable Bremskraft aufbringt.

Schließlich ist es möglich, den jeweiligen Verschleißnachsteller **300** bzw. **400** so auszubilden, daß er eine "Hilfslösefunktion" aufweist, die dann wirksam wird, wenn die erfindungsgemäße Einrichtung durch einen Defekt in der Zuspannlage klemmt, so daß jederzeit eine Weiterbewegung des Fahrzeugs gewährleistet ist. Zu diesem Zweck weist der Verschleißnachsteller z.B. eine Gewindespindel mit nichthemmendem Gewinde und Mutter auf.

Bezüglich noch weiterer, nicht erläuteter Wirkungen und Vorteile der Erfindung wird im übrigen ausdrücklich auf die Zeichnung verwiesen.

## Patentansprüche

1. Bremsanlage von Schienen- und Nutzfahrzeugen mit einer Krafterzeugungseinrichtung zum Erzeugen eines in einer bestimmten Richtung wirkenden, reversiblen Arbeitshubs mit veränderbarer Kraft, wobei der Arbeitshub auf ein solches Kraftaufnahmesystem einwirkt, das infolge von im wesentlichen linear ansteigender bzw. abnehmender elastischer Verformung eine sich hubabhängig verändernde Gegenkraft entwickelt, **gekennzeichnet durch**
eine Hebeleinrichtung **(20)**, die mit ihrem Hebellager **(24)** ortsfest gegenüber dem Kraftaufnahmesystem **(S)** gelagert ist und über einen Kraftangriffspunkt mit vorgegebener Hebelarmlänge auf das Kraftaufnahmesystem einwirkt,
einen energiespeichernden Krafterzeuger **(10)**, der auf die Hebeleinrichtung **(20)** an einer veränderbaren Position ihres Hebelarms einwirkt und in der Lage ist, bei Vergrößerung der Hebelarmlänge einen Teil der in ihm gespeicherten Energie abzugeben und bei Verkleinerung der Hebelarmlänge die vom Kraftaufnahmesystem aufgenommene Energie zumindest teilweise wieder aufzunehmen, und
eine Verstellvorrichtung **(30)** zum steuerbaren Ändern derjenigen Position, an der der Krafterzeuger **(10)** auf den Hebelarm **(21)** der Hebeleinrichtung **(20)** einwirkt.

2. Einrichtung nach Anspruch 1, **dadurch gekennzeichnet, daß** der Krafterzeuger **(10)** so dimensioniert ist, daß in ihm mindestens die bei maximalem Hub bzw. größter Hebelarmlänge vom Kraftaufnahmesystem **(S)** aufgenommene Energiemenge speicherbar ist.

3. Einrichtung nach Anspruch 1 oder 2, **dadurch gekennzeichnet, daß** als energiespeichernder Krafterzeuger eine Federspeichervorrichtung **(10)** vorgesehen ist.

4. Einrichtung nach einem der Ansprüche 1 bis 3, **dadurch gekennzeichnet, daß** der Krafterzeuger **(10)** gegenüber der Hebeleinrichtung **(20)** in einem ortsfesten Lager **(18)** schwenkbar gelagert ist und an einer Hebelarmfläche **(23)** der Hebeleinrichtung **(20)** verschwenkbar anliegt, die bezüglich des Lagers **(18)** des Krafterzeugers **(10)** im wesentlichen kreisbogenförmig ausgebildet ist.

5. Einrichtung nach Anspruch 4, **dadurch gekennzeichnet, daß** die Hebelarmfläche **(23)** der Hebeleinrichtung **(20)** so gestaltet ist, daß die von der Verstellvorrichtung **(30)** zum Schwenken des Krafterzeugers **(10)** erforderliche Kraft zur Vergrößerung des Arbeitshubs kleiner als Null ist.

6. Einrichtung nach Anspruch 4, **dadurch gekennzeichnet, daß** die Hebelarmfäche **(23)** der Hebeleinrichtung **(20)** so gestaltet ist, daß die von der Verstellvorrichtung **(30)** zum Schwenken des Krafterzeugers **(10)** erforderliche Kraft zur Verkleinerung des Arbeitshubs kleiner als Null ist.

7. Einrichtung nach einem der Ansprüche 4 bis 6, **dadurch gekennzeichnet, daß** der Krafterzeuger **(10)** in der dem Arbeitshub Null entsprechenden Stellung an einer Position der Hebelarmfläche **(23)** der Hebeleinrichtung **(20)** anliegt, in der die Hebelarmlänge - bezogen auf die Arbeitshubrichtung - kleiner oder gleich Null ist.

8. Einrichtung nach einem der Ansprüche 4 bis 7, **dadurch gekennzeichnet, daß** der Krafterzeuger **(10)** über ein Gleitelement **(15)** an der Hebelarmfläche **(23)** der Hebeleinrichtung **(20)** verschiebbar anliegt.

9. Einrichtung nach Anspruch 8, **dadurch gekennzeichnet, daß** als Gleitelement eine an einem hebelseitigen Ende des Krafterzeugers **(10)** gelagerte Rolle **(15)** vorgesehen ist.

10. Einrichtung nach einem der Ansprüche 1 bis 9, **dadurch gekennzeichnet, daß** der Hebelarm **(21)** der Hebeleinrichtung **(20)** in einer jeweiligen Endlage an einem ortsfesten Anschlag **(2)** anliegt.

11. Einrichtung nach einem der Ansprüche 1 bis 10, **dadurch gekennzeichnet, daß** der Kraftangriffspunkt, mittels dem die Hebeleinrichtung **(20)** auf das Kraftaufnahmesystem **(S)** einwirkt, am Hebelarm **(21)** der Hebeleinrichtung **(20)** vorgesehen ist.

12. Einrichtung nach einem der Ansprüche 1 bis 10, **dadurch gekennzeichnet, daß** der Kraftangriffspunkt, mittels dem die Hebeleinrichtung **(20)** auf das Kraftaufnahmesystem **(S)** einwirkt, an einem Exzenter **(25)** der Hebeleinrichtung **(20)** vorgesehen ist.

13. Einrichtung nach einem der Ansprüche 1 bis 12, **gekennzeichnet** durch eine mit einer Schiebeführung versehene Stange **(50)**, die mit dem Kraftangriffspunkt gelenkig verbunden ist und die Kraft an das Kraftaufnahmesystem **(S)** ankoppelt.

14. Einrichtung nach einem der Ansprüche 4 bis 13, **dadurch gekennzeichnet, daß** das Hebellager **(24)** der Hebeleinrichtung **(20)** als Halbschalenlager ausgebildet ist, wobei der sich an der Hebelarmfläche **(23)** abstützende Krafterzeuger **(10)** die Hebeleinrichtung **(20)** an der dem Halbschalenlager gegenüberliegenden Seite einspannt.

15. Einrichtung nach einem der Ansprüche 1 bis 14, **dadurch gekennzeichnet, daß** als Verstellvorrichtung **(30)** ein insbesondere elektrischer Verstellmotor vorgesehen ist.

16. Einrichtung nach einem der Ansprüche 5 bis 14, **dadurch gekennzeichnet, daß** als Verstellvorrichtung **(30)** ein insbesondere motorisch drehbarer Exzenter **(37)** vorgesehen ist, der mit seiner Exzenterfläche an einer entsprechenden Stützfläche **(38)** des Krafterzeugers **(10)** anliegt.

17. Einrichtung nach Anspruch 16, **dadurch gekennzeichnet, daß** die Stützfläche des Krafterzeugers **(10)** als Rolle **(38)** ausgebildet ist.

18. Einrichtung nach einem der Ansprüche 1 bis 14, **dadurch gekennzeichnet, daß** als Verstellvorrichtung **(30)** eine Pleuelantriebsvorrichtung **(34, 35)** vorgesehen ist.

19. Einrichtung nach einem der Ansprüche 1 bis 14, **dadurch gekennzeichnet, daß** als Verstellvorrichtung **(30)** ein Druckluftzylinder vorgesehen ist.

20. Einrichtung nach einem der Ansprüche 1 bis 19, **gekennzeichnet durch** einen Sensor zum Erfassen derjenigen Position, an der der Krafterzeuger **(10)** auf den Hebelarm **(21)** der Hebeleinrichtung **(20)** einwirkt.

21. Einrichtung nach den Ansprüchen 4 und 20, **dadurch gekennzeichnet, daß** der Sensor den momentanen Schwenkwinkel des Krafterzeugers **(10)** erfaßt.

22. Einrichtung nach einem der Ansprüche 1 bis 21, **gekennzeichnet durch** einen Sensor zum Erfassen des momentanen Arbeitshubs.

23. Einrichtung nach Anspruch 22, **dadurch gekennzeichnet, daß** der Sensor die Winkellage des Hebelarms **(21)** der Hebeleinrichtung **(20)** erfaßt.

24. Zuspannvorrichtung für eine Scheibenbremse **(100)** mit einem Schwimmsattel **(1)**, der parallel zur Drehachse der Scheibenbremse **(100)** verschiebbar gelagert ist, **dadurch gekennzeichnet, daß** eine Einrichtung nach einem der Ansprüche 1 bis 23 zur Erzeugung der Zuspannkraft vorgesehen ist.

25. Zuspannvorrichtung nach Anspruch 24 in Verbindung mit Anspruch 13, **dadurch gekennzeichnet, daß** das Ende der Stange **(50)** gegen eine im Schwimmsattel **(1)** gelagerte Bremsbacke **(112)** drückt.

26. Zuspannvorrichtung für eine Scheibenbremse **(100)** mit einer Bremszange, die zwei Zangenhebel **(201,202)** aufweist, an deren bremsscheibenseitigem Ende jeweils eine auf die Bremsscheibe **(100)** einwirkende Bremsbacke sitzt und die an einem mittigen Verbindungselement **(300)** sowie an einem bremsscheibenabgewandten Verbindungselement **(400)** gelenkig miteinander verbunden sind, wobei mindestens eines der beiden Verbindungselemente zum Zuspannen der Zangenhebel längenveränderlich ist, **dadurch gekennzeichnet, daß** zum Ändern der Länge des zum Zuspannen der Zangenhebel vorgesehenen Verbindungselements eine Einrichtung nach einem der Ansprüche 1 bis 23 vorgesehen ist.

27. Zuspannvorrichtung nach Anspruch 26, **dadurch gekennzeichnet, daß** die Krafterzeugungseinrichtung das bremsscheibenabgewandte Verbindungselement der beiden Zangenhebel **(201,202)** bildet und daß das mittige Verbindungselement von einer Verschleißnachstelleinrichtung **(300)** gebildet ist.

28. Zuspannvorrichtung nach Anspruch 26, **dadurch gekennzeichnet, daß** die Krafterzeugungseinrichtung das mittige Verbindungselement **(300)** der beiden Zangenhebel **(201, 202)** bildet und daß das bremsscheibenabgewandte Verbindungselement von einer Verschleißnachstelleinrichtung **(400)** gebildet ist.

29. Zuspannvorrichtung nach Anspruch 27 oder 28, **dadurch gekennzeichnet, daß** der schwenkbare Krafterzeuger **(10)** koaxial mit einem der beiden Drehlager des mittigen bzw. bremsscheibenabgewandten Verbindungselements einer der beiden Zangenhebel **(202)** gelagert ist.

30. Zuspannvorrichtung nach Anspruch 29, **dadurch gekennzeichnet, daß** die Hebeleinrichtung **(20)** an einer im wesentlichen L-förmigen Stütze gelagert ist, zu der der Krafterzeuger **(10)** im Lösezustand der Bremse im wesentlichen parallel verläuft.

31. Zuspannvorrichtung nach einem der Ansprüche 27 bis 30, **dadurch gekennzeichnet, daß** die Achse des Krafterzeugers **(10)** derart in Bezug zur Hebelarmfläche **(23)** der Hebeleinrichtung **(20)** angeordnet ist, daß auf den Krafterzeuger **(10)** kein Knickmoment ausgeübt wird.

32. Zuspannvorrichtung nach einem der Ansprüche 24 bis 31, **dadurch gekennzeichnet, daß** die Hebelarmfläche **(23)** der Hebeleinrichtung **(20)** so geformt ist, daß der Anlegehub zum Überwinden des Lüftspiels mit einer geringfügigen Schwenkbewegung des Krafterzeugers **(10)** durchführbar ist.

## Claims

1. Brake apparatus for rail and commercial vehicles, having a force-generating device for generating a reversible working stroke of variable force and acting in a predetermined direction, wherein the working stroke acts on a force-receiving system which, as a result of substantially linearly increasing or decreasing elastic deformation, generates a counter force varying with the stroke, characterised by
- a lever device (20) which is mounted in stationary fashion with its lever bearing (24) with respect to the force-receiving system (S) and acts on the force-receiving system via a point of application of force with a predetermined length of lever arm,
- an energy-storing force generator (10) which acts on the lever device (20) at a variable position of its lever arm and is in a position to release part of the energy stored in it when the length of the lever arm increases, and to absorb again, at least partially, the energy taken up by the force-receiving system when the length of the lever arm decreases, and
- an adjustment device (30) for controllably varying the position at which the force generator (10) acts on the lever arm (21) of the lever device (20).

2. Device according to claim 1, characterised in that the force generator (10) is of such dimensions that at least the amount of energy taken up from the force-receiving system of maximum stroke or greatest lever arm length can be stored in it.

3. Device according to claim 1 or 2, characterised in that a spring storage device (10) is provided as an energy-storing force generator.

4. Device according to one of claims 1 to 3, characterised in that the force generator (10) is mounted pivotably in a fixed bearing (18) with respect to the lever device (20) and pivotably abuts a lever arm surface (23) of the lever device (20) which is of substantially arcuate construction with respect to the bearing (18) of the force generator (10).

5. Device according to claim 4, characterised in that the lever arm surface (23) of the lever device (20) is designed so that the force needed by the adjustment device (30) for pivoting the force generator (10) so as to increase the working stroke is lower than zero.

6. Device according to claim 4, characterised in that the lever arm surface (23) of the lever device (20) is designed so that the force needed by the adjustment device (30) for pivoting the force generator (10) so as to reduce the working stroke is lower than zero.

7. Device according to one of claims 4 to 6, characterised in that in the position corresponding to a working stroke of zero the force generator (10) abuts a location of the lever arm surface (23) of the lever device (20) in which the length of the lever arm - with respect to the working stroke direction - is less than or equal to zero.

8. Device according to one of claims 4 to 7, characterised in that the force generator (10) abuts the lever arm surface (23) of the lever device (20) displaceably by means of a sliding element (15).

9. Device according to claim 8, characterised in that a roller (15) mounted at one end of the force generator (10) on the lever side is provided as the sliding element.

10. Device according to one of claims 1 to 9, characterised in that the lever arm (21) of the lever device (20) abuts a fixed stop (2) in one respective end position.

11. Device according to one of claims 1 to 10, characterised in that the point of application of force, by means of which the lever device (20) acts on the force-receiving system (S), is provided on the lever arm (21) of the lever device (20).

12. Device according to one of claims 1 to 10, characterised in that the point of application of force, by means of which the lever device (20) acts on the force-receiving system (S), is provided on a cam (25) of the lever device (20).

13. Device according to one of claims 1 to 12, characterised by a rod (50), provided with a sliding guideway, which is hingedly connected to the force application point, and the force is coupled to the force-receiving system (S).

14. Device according to one of claims 4 to 13, characterised in that the lever bearing (24) of the lever device (20) is designed as a half-shell-shaped bearing, with the force generator (10) supported on the lever arm surface (23) loading the lever device (20) on the side opposite the half-shell-shaped bearing.

15. Device according to one of claims 1 to 14, characterised in that an adjustment motor, in particular an electric motor, is provided as the adjustment device (30).

16. Device-according to one of claims 5 to 14, characterised in that in particular a motor-driven rotatable cam (37) is provided as the adjustment device (30) and abuts a corresponding support surface (38) of the force generator (10) with its cam surface.

17. Device according to claim 16, characterised in that the support surface of the force generator (10) is designed as a roller (38).

18. Device according to one of claims 1 to 14, characterised in that a connecting rod drive (34, 35) is provided as the adjustment device (30).

19. Device according to one of claims 1 to 14, characterised in that a compressed air cylinder is provided as the adjustment device (30).

20. Device according to one of claims 1 to 19, characterised by a sensor for detecting the position in which the force generator (10) is acting on the lever arm (21) of the lever device (20).

21. Device according to claims 4 and 20, characterised in that the sensor detects the instantaneous pivot angle of the force generator (10).

22. Device according to one of claims 1 to 21, characterised by a sensor for detecting the instantaneous working stroke.

23. Device according to claim 22, characterised in that the sensor detects the angular position of the lever arm (21) of the lever device (20).

24. Clamping device for a disc brake (100) having a floating caliper (1) which is displaceably mounted parallel to the axis of rotation of the disc brake (100), characterised in that a device in accordance with claims 1 to 23 is provided for generating the clamping force.

25. Clamping device according to claim 24 in connection with claim 13, characterised in that the end of the rod (50) presses against a brake shoe (112) mounted in the floating caliper (1).

26. Clamping device for a disc brake (100) having a brake caliper which has two clamping levers (201, 202) on whose brake disc side end there is located a respective brake shoe acting on the brake disc (100), and which are connected hingedly together by way of a central connecting element (300) and a connecting element remote from the brake disc, at least one of the two connecting elements being variable in length for clamping the clamping levers, characterised in that to change the length of the connecting element provided for clamping the clamping levers there is provided a device in accordance with one of claims 1 to 23.

27. Clamping device according to claim 26, characterised in that the force generation device forms the connecting element of the two clamping levers (201, 202) remote from the brake disc, and in that the central connecting element is formed by a wear-adjusting device (300).

28. Clamping device according to claim 26, characterised in that the force generation device forms the central connecting element (300) of the two clamping levers (201, 202), and in that the connecting element remote from the brake disc is formed by a wear-adjusting device (400).

29. Clamping device according to claim 27 or 28, characterised in that the pivotable force generator (10) is mounted coaxially with one of the two pivot bearings of the central connecting element, or of the one remote from the brake disc, of one of the two clamping levers (202).

30. Clamping device according to claim 29, characterised in that the lever device (20) is mounted on a substantially L-shaped support to which the force generator (10) extends in a substantially parallel manner in the release state of the brake.

31. Clamping device according to one of claims 27 to 30, characterised in that the axis of the force generator (10) is arranged in such a way with respect to the lever arm surface (23) of the lever device (20) that no bending moment is exerted on the force generator (10).

32. Clamping device according to one of claims 24 to 31, characterised in that the lever arm surface (23) of the lever device (20) is formed in such a way that the application stroke for surmounting the air clearance can be carried out with a slight pivoting movement of the force generator (10).

## Revendications

1. Dispositif de freinage de véhicules sur rails et de véhicules utilitaires, comportant un dispositif de génération de force pour engendrer une course de travail réversible, opérant dans une direction déterminée avec une force variable, la course de travail agissant sur un système d'absorption de force tel qu'il développe, par suite d'une déformation élastique croissante ou décroissante de manière essentiellement linéaire, une force antagoniste qui varie en fonction de la course, caractérisé par
un dispositif à levier (20) qui est positionné avec son palier de levier (24) stationnaire par rapport au système d'absorption de force (S) et qui agit, par l'intermédiaire d'un point d'application de force, avec une longueur de bras de levier prédéfinie, sur le système d'absorption de force,
un générateur de force (10) accumulateur d'énergie qui agit sur le dispositif à levier (20), à une position variable de son bras de levier, et qui est en mesure, en cas d'augmentation de la longueur du bras de levier, de délivrer une partie de l'énergie accumulée en lui et, en cas de diminution de la longueur du bras de levier, de reprendre au moins partiellement l'énergie absorbée par le système d'absorption de force, et
un dispositif de positionnement (30) pour faire varier de manière réglable la position à laquelle le générateur de force (10) agit sur le bras de levier (21) du dispositif à levier (20).

2. Dispositif selon la revendication 1, caractérisé en ce que le générateur de force (10) est dimensionné de telle manière qu'au moins la quantité d'énergie absorbée par le système d'absorption de force (S), pour une course maximale ou pour la plus grande longueur de bras de levier, peut être accumulée en lui.

3. Dispositif selon la revendication 1 ou 2, caractérisé en ce qu'il est prévu un dispositif accumulateur à ressort (10) comme générateur de force accumulateur d'énergie.

4. Dispositif selon l'une des revendications 1 à 3, caractérisé en ce que le générateur de force (10) est monté pivotant par rapport au dispositif à levier (20) dans un palier stationnaire (18) et s'applique à pivotement sur une surface (23) du bras de levier du dispositif à levier (20), qui est réalisée sensiblement en forme d'arc de cercle par rapport au palier (18) du générateur de force (10).

5. Dispositif selon la revendication 4, caractérisé en ce que la surface (23) du bras de levier du dispositif à levier (20) est dotée d'une forme telle que la force requise par le dispositif de positionnement (30) pour faire pivoter le générateur de force (10) pour agrandir la course de travail est inférieure à zéro.

6. Dispositif selon la revendication 4, caractérisé en ce que la surface (23) du bras de levier du dispositif à levier (20) est dotée d'une forme telle que la force requise par le dispositif de positionnement (30) pour faire pivoter le générateur de force (10) pour réduire la course de travail est inférieure à zéro.

7. Dispositif selon l'une des revendications 4 à 6, caractérisé en ce que le générateur de force (10), dans la position qui correspond à la course de travail nulle, s'applique à une position de la surface (23) du bras de levier du dispositif à levier (20), dans laquelle la longueur du bras de levier - par rapport à la direction de la course de travail - est inférieure ou égale à zéro.

8. Dispositif selon l'une des revendications 4 à 7, caractérisé en ce que le générateur de force (10) repose de manière mobile, par un élément glissant (15), sur la surface (23) du bras de levier du dispositif à levier (20).

9. Dispositif selon la revendication 8, caractérisé en ce qu'il est prévu, comme élément glissant, un galet (15) positionné à une extrémité, située du côté du levier, du générateur de force (10).

10. Dispositif selon l'une des revendications 1 à 9, caractérisé en ce que le bras de levier (21) du dispositif à levier (20) s'applique, dans une position extrême respective, contre une butée stationnaire (2).

11. Dispositif selon l'une des revendications 1 à 10, caractérisé en ce que le point d'application de force, au moyen duquel le dispositif à levier (20) agit sur le système d'absorption de force (S), est prévu sur le bras de levier (21) du dispositif à levier (20).

12. Dispositif selon l'une des revendications 1 à 10, caractérisé en ce que le point d'application de force, au moyen duquel le dispositif à levier (20) agit sur le système d'absorption de force (S), est prévu sur un excentrique (25) du dispositif à levier (20).

13. Dispositif selon l'une des revendications 1 à 12, caractérisé par une tige (50), pourvue d'un guidage coulissant, qui est reliée de manière articulée au point d'application de force et qui couple la force au système d'absorption de force (S).

14. Dispositif selon l'une des revendications 4 à 13, caractérisé en ce que le palier de levier (24) du dispositif à levier (20) est réalisé sous la forme d'un palier en demi-coquille, le générateur de force (10) qui s'appuie sur la surface (23) du bras de levier serrant le dispositif à levier (20) sur le côté opposé au palier en demi-coquille.

15. Dispositif selon l'une des revendications 1 à 14, caractérisé en ce qu'il est prévu un servo-moteur, en particulier un servo-moteur électrique, comme dispositif de positionnement (30).

16. Dispositif selon l'une des revendications 5 à 14, caractérisé en ce qu'il est prévu, comme dispositif de positionnement (30), un excentrique (37), en particulier un excentrique rotatif entraîné par un moteur, qui s'applique, par sa surface excentrée, contre une surface d'appui (38) correspondante du générateur de force (10).

17. Dispositif selon la revendication 16, caractérisé en ce que la surface d'appui du générateur de force (10) est réalisée sous forme d'un galet (38).

18. Dispositif selon l'une des revendications 1 à 14, caractérisé en ce qu'il est prévu un dispositif d'entraînement par bielle (34, 35) comme dispositif de positionnement (30).

19. Dispositif selon l'une des revendications 1 à 14, caractérisé en ce qu'il est prévu un vérin à air comprimé comme dispositif de positionnement (30).

20. Dispositif selon l'une des revendications 1 à 19, caractérisé par un détecteur pour détecter la position à laquelle le générateur de force (10) agit sur le bras de levier (21) du dispositif à levier (20).

21. Dispositif selon les revendications 4 et 20, caractérisé en ce que le détecteur détecte l'angle de pivotement instantané du générateur de force (10).

22. Dispositif selon l'une des revendications 1 à 21, caractérisé par un détecteur pour détecter la course de travail instantanée.

23. Dispositif selon la revendication 22, caractérisé en ce que le détecteur détecte la position angulaire du bras de levier (21) du dispositif à levier (20).

24. Dispositif de serrage pour un frein à disque (100), comportant un étrier flottant (1) qui est monté mobile parallèlement à l'axe de rotation du frein à disque (100), caractérisé en ce qu'il est prévu un dispositif selon l'une des revendications 1 à 23 pour engendrer la force de serrage.

25. Dispositif de serrage selon la revendication 24 en relation avec la revendication 13, caractérisé en ce que l'extrémité de la tige (50) appuie contre une mâchoire de frein (112) montée dans l'étrier flottant (1).

26. Dispositif de serrage pour un frein à disque (100), comportant un étrier de frein qui présente deux leviers d'étrier (201, 202), à l'extrémité, côté disque de frein, de chacun desquels se trouve une mâchoire de frein agissant sur le disque de frein (100) et qui sont reliés l'un à l'autre de manière articulée au niveau d'un élément de raccord central (300) ainsi qu'au niveau d'un élément de raccord (400) situé à l'opposé du disque de frein, au moins l'un des deux éléments de raccord étant de longueur variable pour serrer les leviers de l'étrier, caractérisé en ce qu'il est prévu un dispositif selon l'une des revendications 1 à 23 pour faire varier la longueur de l'élément de raccord prévu pour serrer les leviers de l'étrier.

27. Dispositif de serrage selon la revendication 26, caractérisé en ce que le dispositif de génération de force fonne l'élément de raccord, situé à l'opposé du disque de frein, des deux leviers (201, 202) de l'étrier, et en ce que l'élément de raccord central est formé par un dispositif de compensation d'usure (300).

28. Dispositif de serrage selon la revendication 26, caractérisé en ce que le dispositif de génération de force forme l'élément de raccord central (300) des deux leviers (201, 202) de l'étrier, et en ce que l'élément de raccord situé à l'opposé du disque de frein est formé par un dispositif de compensation d'usure (400).

29. Dispositif de serrage selon la revendication 27 ou 28, caractérisé en ce que le générateur de force pivotant (10) est monté coaxialement à l'un des deux paliers de pivotement de l'élément de raccord central ou de l'élément de raccord, situé à l'opposé du disque de frein de l'un des deux leviers (202) de l'étrier.

30. Dispositif de serrage selon la revendication 29, caractérisé en ce que le dispositif à levier (20) est monté sur un support essentiellement en forme de L, auquel le générateur de force (10) est essentiellement parallèle, lorsque le frein est à l'état relâché.

31. Dispositif de serrage selon l'une des revendications 27 à 30, caractérisé en ce que l'axe du générateur de force (10) est placé par rapport à la surface (23) du bras de levier du dispositif à levier (20) de telle manière qu'aucun moment de flambage ne soit exercé sur le générateur de force (10).

32. Dispositif de serrage selon l'une des revendications 24 à 31, caractérisé en ce que la surface (23) du bras de levier du dispositif à levier (20) est formée de telle manière que la course morte pour surmonter le jeu de déblocage puisse être effectuée avec un léger pivotement du générateur de force (10).
